# EUROPÄISCHE PATENTSCHRIFT

(11) **EP 0 931 687 B1**
(45) Veröffentlichungstag und Bekanntmachung des Hinweises auf die Patenterteilung: **31.07.2002**
(21) Anmeldenummer: 98123076.6
(22) Anmeldetag: 10.12.1998
(51) Int. Cl.: B60K 41/14, F16H 61/00

(54) **Verfahren zur Übersetzungsregelung eines stufenlosen Automatikgetriebes (CVT-Getriebe) eines Kraftfahrzeugs**
Process for controlling the ratio of a vehicle's continuously variable transmission (CVT)
Procédé de contrôle d'une transmission à variation de vitesse continue (CVT) d'un véhicule

(30) Priorität: 21.01.1998 DE 19802075
(43) Veröffentlichungstag der Anmeldung: 28.07.1999
(73) Patentinhaber: Volkswagen Aktiengesellschaft, 38436 Wolfsburg (DE)
(72) Erfinder: Adamis, Panagiotis, Prof., 38442 Wolfsburg (DE); Petersen, Rainer, Dipl.-Ing., 38444 Wolfsburg (DE); Hofmann, Lars, Dipl.-Ing., 04600 Altenburg (DE)

(56) Entgegenhaltungen:
- EP-A- 0 421 241
- DE-A- 19 645 975

## Beschreibung

Die Erfindung betrifft ein Verfahren zum Regeln eines stufenlosen Automatikgetriebes (CVT-Getriebe) eines Kraftfahrzeugs mit einem Antriebsaggregat und einem manuell betätigbaren Fahrpedal, wobei in Abhängigkeit von einer Stellung des Fahrpedals FP eine Soll-Drehzahl des Antriebsaggregats nₛₒₗₗ als Regelgröße für eine Übersetzungsregelung des stufenlosen Automatikgetriebes bestimmt wird, gemäß dem Oberbegriff des Anspruchs 1.

Ein derartiges Verfahren ist im Stand der Technik bekannt.

Bei stufenlosen Automatikgetrieben, nachfolgend als CVT-Getriebe bezeichnet, wird, je nach Fahrerwunsch für das Betriebsverhalten des Kraftfahrzeuges, eine verbrauchsoptimierte oder eine fahrleistungsoptimierte Steuerkurve in einem Motorkennfeld mittels eines Wählhebels starr ausgewählt. Hierbei ergibt sich jedoch der Nachteil, daß durch die typische Verstellcharakterisik, nämlich konstante Motordrehzahl beim Beschleunigen, das Fahrverhalten als nicht den Fahrerwünschen entsprechend empfunden wird. Ferner kann eine derartig starre Steuerung eines CVT-Getriebes wechselnden äußeren Einflüssen und Fahrbedingungen, wie beispielsweise Steigungen, Gefällen, Gegenwind, der Beladung und/oder einer zusätzlicher Anhängerlast nicht ausreichend Rechnung tragen.

Der vorliegenden Erfindung liegt daher die Aufgabe zugrunde, ein Verfahren der obengenannten Art zur Verfügung zu stellen, wobei die obengenannten Nachteile überwunden werden und eine verbesserte, auf äußere Einflüsse und sich ändernde Betriebsbedingungen reagierende Regelung für das CVT-Getriebe mit hohem Fahrkomfort zur Verfügung gestellt wird.

Diese Aufgabe wird erfindungsgemäß durch ein Verfahren der o.g. Art mit den in Anspruch 1 angebenden Verfahrensschritten gelöst. Vorteilhafte Ausgestaltungen der Erfindung sind in den abhängigen Ansprüchen angegeben.

Dazu sind erfindungsgemäß folgende Verfahrensschritte vorgesehen:
(a) Bestimmen einer zeitvariablen Antwortfunktion PT1(t) als Reaktion auf eine Fahrpedalbetätigung, wobei eine der Fahrpedalbetätigung entsprechende Funktion mit einer vorbestimmten Zeitkonstante T1 tiefpaßgefiltert wird, so daß PT1(t) von null gegen einen vorbestimmten Grenzwert V ansteigt,
(b) Bestimmen einer zeitvariablen modifizierten Antwortfunktion PT1_{mod}(t) aus PT1(t) derart, daß letzterer ein Sprunganteil 1-V hinzugefügt wird, so daß PT1_{mod} als Antwort auf die Fahrpedalbetätigung auf den Wert 1-V springt und anschließend mit der Zeitkonstante T1 ansteigt,
(c) Bestimmen einer geglätteten zeitvariablen Antwortfunktion PT1_{gl}(t) durch Tiefpaßfiltern der zeitvariablen modifizierten Antwortfunktion PT1_{mod}(t) mit einer vorbestimmten Zeitkonstante T1_{gl} und
(d) Bestimmen der Soll-Drehzahl des Antriebsaggregats nₛₒₗₗ aus der geglätteten zeitvariablen modifizierten Antwortfunktion PT1_{gl} gemäß einer ersten vorbestimmten Übertragungsfunktion.

Dies hat den Vorteil, daß eine spontane, schnelle und mittels der Zeitcharakteristik an unterschiedlichste Anforderungen anpaßbare Reaktion auf die Änderung des Fahrerwunsches durch ein PT1-Verhalten mit Sprunganteil der Motordrehzahl, und damit der abgegebenen Leistung des Antriebsaggregats, sichergestellt ist. Die zusätzliche Glättung in Schritt (c) erzielt eine Komfortsteigerung durch Harmonisieren des Drehzahlverlaufes nach einer Fahrpedaländerung und reduziert Verstellgeschwindigkeiten durch ein frühzeitiges Einleiten der Verstellung.

Veränderlichen Fahrwiderständen, wie beispielsweise Beschleunigungen, Steigungen, Lasten bzw. Anhängerlasten oder ähnlichem wird im Regelverhalten dadurch Rechnung getragen, daß in Schritt (a) die Zeitkonstante T1 in Abhängigkeit von einer Fahrzeugbeschleunigung gemäß T1 = f(dv/dt) bestimmt wird.

Zweckmäßigerweise ist die einer Fahrpedalbetätigung entsprechende Funktion in Schritt (a) eine Sprungfunktion, welche insbesondere auf 1 normiert ist, wobei V einen Wert zwischen 0 und 1 annehmen kann.

Ein Ansprechverhalten des Kraftfahrzeuges sowie einen zu einer jeweiligen Fahrpedalstellung gehörenden Drehzahlbereich stimmt man durch folgende zusätzliche Schritte ab:
(a0) Bestimmen eines Fahrpedalsignals FP gemäß einer Betätigung des Fahrpedals, und
(a1) Bestimmen eines modifizierten Fahrpedalwertes FP_{mod} aus FP gemäß einer zweiten vorbestimmten Übertragungsfunktion zwischen FP und FP_{mod},
wobei anschließend in Schritt (a) eine Tiefpaßfilterung des modifizierten Fahrpedalwertes FP_{mod} erfolgt. Hierbei wird zur Berücksichtigung unterschiedlicher Fahrertypen bzw. unterschiedlicher Gewohnheiten von Fahren bzw. unterschiedlichen gewünschten Leistungsanforderungen die zweite vorbestimmte Übertragungsfunktion in Abhängigkeit von einem gewünschten Fahrzeugverhalten derart gewählt, daß sich ein ökonomischer oder ein sportlicher Fahrzeugbetrieb einstellt.

Für weitere Verfahrensschritte wird in vorteilhafter Weise in einem weiteren zusätzlichen Schritt (e) eine Zieldrehzahl n_{Ziel} aus FP_{mod} gemäß der ersten vorbestimmten Übertragungsfunktion bestimmt, wobei zur Berücksichtigung unterschiedlicher Fahrertypen bzw. unterschiedlicher Gewohnheiten von Fahren bzw. unterschiedlichen gewünschten Leistungsanforderungen die erste vorbestimmte Übertragungsfunktion in Abhängigkeit von einem gewünschten Fahrzeugverhalten insbesondere derart gewählt wird, daß sich ein ökonomischer oder ein sportlicher Fahrzeugbetrieb einstellt.

Eine komfortable Abstimmung eines Drehzahlüberganges für unterschiedliche Ausgangssituationen erzielt man dadurch, daß in Schritt (c) die Zeitkonstante T1_{gl} in Abhängigkeit von der in Schritt (e) bestimmten Drehzahl n_{Ziel} und einer momentanen Istdrehzahl nᵢₛₜ gemäß T1_{gl} = f(n_{Ziel},nᵢₛₜ) bestimmt wird. Auf diese Weise kann beispielsweise ein Verharren in einer Anfahrübersetzung sowie eine Begrenzung einer Motordrehzahländerung durch endliche Verstellgeschwindigkeiten berücksichtigt werden.

Durch einen Vergleich von nₛₒₗₗ mit n_{Ziel}, wobei im Falle nₛₒₗₗ > n_{Ziel} die Solldrehzahl nₛₒₗₗ mit einem vorbestimmten Drehzahlgradienten auf n_{Ziel}, insbesondere linear, abgesenkt wird, berücksichtigt das erfindungsgemäße Regelverfahren auch in besonders vorteilhafter Weise Fahrpedalbetätigungen, welche einen Wunsch nach geringerer oder negativer Beschleunigung (Motorbremse) anzeigen.

Besondere Situationen, in denen eine hohe Beschleunigung bzw. Motorleistung, beispielsweise für einen Überholvorgang, gewünscht wird, berücksichtigt man durch einen zusätzlichen Schritt
(g) Feststellen ob eine Kickdown-Betätigung des Fahrpedals vorliegt und bei positiver Feststellung Setzten nₛₒₗₗ gleich einer Nenndrehzahl n_{Nenn} des Antriebsaggregats.

Eine für einen momentanen Fahrzustand optimale Leistungsabgabe des Antriebesaggregates erzielt man durch den weiteren Schritt
(e1) Bestimmen einer Drehzahl n_{Dkl} aus PT1_{mod} gemäß der ersten vorbestimmten Übertragungsfunktion zur Bestimmung eines Drosselklappenwinkels α einer Drosselklappenstellung.

Hierbei wird den entsprechend in Schritten (f) und (g) erfaßten Fahrsituationen dadurch in besonders vorteilhafter Weise Rechnung getragen, daß in Schritt (f) im Falle nₛₒₗₗ > n_{Ziel} die Drehzahl n_{Dkl} gleich der Nenndrehzahl n_{Nenn} des Antriebsaggregats und/oder in Schritt (g) bei positiver Feststellung einer Kickdown-Betätigung n_{Dkl} gleich der Nenndrehzahl n_{Nenn} des Antriebsaggregats gesetzt wird.

Zum entsprechenden Steuern einer Drosselklappe des Antriebsaggregats wird in einem weiteren Schritt (g1) der Drosselklappenwinkel α einer Drosselklappenstellung aus n_{Dkl} gemäß einer dritten vorbestimmten Übertragungsfunktion zwischen n_{Dkl} und α bestimmt.

Zur Berücksichtigung unterschiedlicher Fahrertypen bzw. unterschiedlicher Gewohnheiten von Fahren bzw. unterschiedlichen gewünschten Leistungsanforderungen wird zweckmäßigerweise die dritte vorbestimmte Übertragungsfunktion in Abhängigkeit von einem gewünschten Fahrzeugverhalten derart gewählt, daß sich ein ökonomischer oder ein sportlicher Fahrzeugbetrieb einstellt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: ein schematisch Ablaufdiagramm eines erfindungsgemäßen Verfahrens und
- Fig. 2A bis 2C: eine Motordrehzahl, eine Scheibenverstellgeschwindigkeit und eine Fahrzeugbeschleunigung über die Zeit t nach einem Fahrpedalsprung bei einem erfindungsgemäßen Verfahren im Vergleich mit einem herkömmlichen CVTGetriebe.

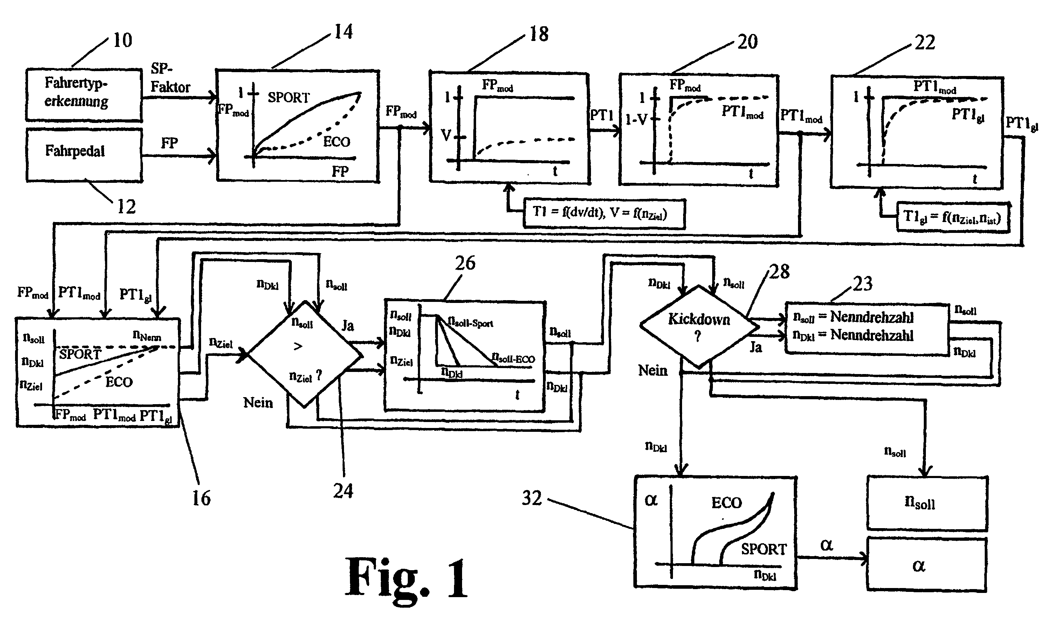

Unter Bezugnahme auf Fig. 1 ist in Funktionsblock 10 eine primäre Eingangsgröße für einen erfindungsgemäßen CVT-Getriebe-Regler ein Fahrpedalwert FP. Eine weitere Eingangsgröße ist ein Fahrertyp in Funktionsblock 12, der mit Fuzzy-Methoden beispielsweise gemäß Offenlegungsschrift DE 43 37 957 A1 ermittelt wird. Dabei wird beispielsweise ein Sportlichkeitsfaktor (SP-Faktor) durch ständige Auswertung der Fahrpedalaktivitäten mit Methoden der FUZZY-Logik online zwischen 0 und 1 ermittelt. Neben der Identifizierung einer eher ökonomischen bzw. sportlichen Fahrweise werden bei dieser Lösung insbesondere auch die Gewohnheiten nervöser Fahrer erkannt und bei der Ermittlung des Sportlichkeitsfaktors berücksichtigt.

Mit diesen Eingangswerten wird in einem nachfolgenden Schritt 14 ein modifiziertes Fahrpedalsignal FP_{mod} erzeugt, um die Fahrpedalcharakteristik beispielsweise für eine gute Dosierbarbeit oder ein gutes Ansprechverhalten zu beeinflussen. Der mittels der FUZZY-Logik ermittelte Fahrertyp dient zur Interpolation zwischen zwei Grenzkennlinien. Dabei ist die eine gestrichelt dargestellte Grenzkennlinie eine verbrauchsoptimierte "ECO"-Kurve für einen wirtschaftlichen Fahrbetrieb und die zweite durchgezogen dargestellte Grenzkennlinie eine fahrdynamikoptimierte "Sport"-Kurve für einen Fahrbetrieb mit verbesserter Fahrdynamik, um den Preis eines erhöhten Kraftstoffverbrauchs. Die FUZZY-Logik beeinflußt ferner eine Bestimmung eines Drosselklappenwinkels α in Abhängigkeit von einer Drehzahl n_{Dkl} in einem späteren Schritt 32. Auch hier wird in Abhängigkeit des Fahrertyps zwischen zwei Werten extremer Kennlinien α(n_{Dkl}) für einen "ECO"- und einen "Sport"-Betrieb des Kraftfahrzeugs interpoliert. In Funktionsblock 14 ermöglicht eine Übertragungsfunktion zwischen dem Fahrpedalwert und einem modifizierten Fahrpedalwert das Ansprechverhalten des Fahrzeuges sowie den zur jeweiligen Fahrpedalstellung gehörenden Drehzahlbereich abzustimmen.

In Schritt 18 erfolgt eine Antwortfunktion PT1 als Reaktion auf einen Sprung der Eingangsgröße FP_{mod}. Die Antwortfunktion PT1 variiert dabei über die Zeit t, beispielsweise in Abhängigkeit von der Zeit t und einer Geschwindigkeitsänderung bzw. einer Beschleunigung dv/dt derart, daß sie einer Funktion PT1 = f (V, t, dv/dt) entspricht. Die Zeitkonstante T1 einer solchen Übertragungsfunktion PT1 wird durch einen Konstantanteil dargestellt und durch einen geschwindigkeitsänderungsabhängigen Anteil dv/dt kontinuierlich beeinflußt, wobei v die Geschwindigkeit des Kraftfahrzeugs ist. Die Funktion PT1 läuft mit der Zeit t gegen einen vorbestimmten Grenzwert. Ein Verstärkungsfaktor V ist dabei eine Funktion einer eingeschwungenen Drehzahl n_{Ziel}, welche in einem nachfolgend erläuterten Schritt 16 ermittelt wird.

In Funktionsblock 18 wird eine Korrelation von Motordrehzahl und Fahrgeschwindigkeit verwirklicht. Dadurch ist eine Rückkopplung zwischen Fahrzeugverhalten und Getriebeansteuerung realisiert. Im Gegensatz zu Steuerungen mit einer festen Zeitkonstante wird hier die Zeitkonstante PT1 mittels der Abhängigkeit von der Geschwindigkeitsänderung dv/dt des Kraftfahrzeugs ständig dem momentanen Fahrzustand angepaßt, wodurch z.B. bei Bergauffahrt das Zieldrehzahlniveau n_{Ziel} früher erreicht wird, korrespondierend zum Erreichen der stationären Fahrgeschwindigkeit. Gleiches gilt beispielsweise für unterschiedliche Beladungszustände.

Das modifizierte Fahrpedalsignal FP_{mod} wird in Schritt 20 tiefpaßgefiltert und mit einem Sprunganteil (1-V) beaufschlagt. So wird sichergestellt, daß die Motordrehzahl nicht sofort auf ihren stationären Endwert (Zieldrehzahl n_{Ziel}) springt, sondern langsam in diesen hineingefahren wird. Mittels des Sprunganteils stellt sich sehr schnell ein dem Fahrpedalwert proportionales Drehzahlniveau ein. Dies sorgt für eine rasche Reaktion auf die Leistungsanforderung des Fahrers. Durch Auswertung der Fahrzeugbeschleunigung dv/dt zur Bestimmung der Zeitkonstante T1 des Tiefpaßfilters in Funktionsblock 18 kann veränderlichen Fahrwiderständen, beispielsweise bei Beschleunigung, Steigung etc., im Regelverhalten Rechnung getragen werden. Bei kleinen Beschleunigungen ergibt sich beispielsweise eine kleine Zeitkonstante T1 und es wird sichergestellt, daß bei Erreichen einer stationären Fahrgeschwindigkeit auch die Motordrehzahl ihren Zielwert n_{Ziel} erreicht. Durch Modifikation des Verstärkungsfaktors V wird eine Anpassung des zu durchlaufenden Drehzahlbereiches während der Beschleunigung an die Zieldrehzahl n_{Ziel} vorgenommen. Der Verstärkungsfaktor V wird bei kleinen Zieldrehzahlen n_{Ziel} gegenüber hohen Zieldrehzahlen beispielsweise vergrößert.

In Schritt 22 wird das modifizierte Signal PT1_{mod} nochmals tiefpaßgefiltert. Die Zeitkonstante T1_{gl} wird dabei beispielsweise in Abhängigkeit der Differenz von Solldrehzahl nₛₒₗₗ und einer Istdrehzahl nᵢₛₜ verändert. Hierdurch wird eine komfortable Abstimmung des Drehzahlüberganges für unterschiedliche Ausgangssituationen erreicht. Auf diese Weise kann z.B. das Verharren in einer Anfahrübersetzung sowie eine Begrenzung einer Motordrehzahländerung durch endliche Verstellgeschwindigkeiten berücksichtigt werden. Dieser Funktionsblock 22 dient einerseits zur Fahrkomfortsteigerung durch Harmonisierung des Drehzahlverlaufes nach einer Fahrpedaländerung und andererseits zur Reduzierung von Verstellgeschwindigkeiten durch ein frühzeitiges Einleiten einer Verstellung.

Die eigentliche Bestimmung der Solldrehzahl nₛₒₗₗ des Antriebsaggregats sowie diverser Hilfsdrehzahlen geschieht in Schritt 16. Neben der Bestimmung von der Solldrehzahl nₛₒₗₗ aus PT1_{gl} wird die Drehzahl zur späteren Bestimmung der Drosselklappenöffnung n_{Dkl} aus PT1_{mod} sowie die Zieldrehzahl n_{Ziel} aus FP_{mod} in Abhängigkeit des Fahrertyps bestimmt. Hierbei wird, analog zu Schritt 14, zwischen einer "SPORT"-Übertragungsfunktion und einer "ECO"-Übertragungsfunktion interpoliert. Trotz eines "Einfangens" der Motordrehzahl durch Schritt 22 kann eine spontane Fahrzeugreaktion dadurch sichergestellt werden, daß die Drehzahl n_{Dkl} zur Bestimmung der Drosselklappenöffnung α in Schritt 22 nicht beeinflußt wird bzw. den Funktionsblock 22 nicht durchläuft und somit nicht gedämpft wird.

In einem nachfolgenden Schritt 24 werden zum Erkennen einer Gasrücknahme durch den Fahrer, also einer verminderten Betätigung des Fahrpedals, die Solldrehzahl nₛₒᵢₗ und die in Schritt 16 bestimmte eingeschwungene Zieldrehzahl n_{Ziel} miteinander verglichen. Ist die Solldrehzahl nₛₒₗₗ größer als die Zieldrehzahl n_{Ziel}, so liegt eine Gasrücknahme vor. In Schritt 26 wird dann die Solldrehzahl nₛₒₗₗ, je nach Fahrertyp, mit einem festgelegten Drehzahlgradienten auf den stationären Endwert n_{Ziel} reduziert. Es wird also ein Zustand, in dem die Solldrehzahl nₛₒₗₗ des Antriebsaggregats größer ist als die Zieldrehzahl n_{Ziel} als "Gasrücknahme" erkannt. Die Drehzahl n_{Dkl} zur Bestimmung der Drosselklappenöffnung wird sofort nach Erkennen dieses Zustandes auf den Zielwert n_{Ziel} zurückgesetzt.

Im nächsten Schritt 28 findet eine Kickdown-Erkennung statt. Bei Auslösung des Kickdowns werden in Schritt 30 beide Drehzahlen nₛₒₗₗ und n_{Dkl} auf n_{Nenn} gesetzt. Dadurch wird dem Fahrer die von ihm gewünschte maximale Leistung des Motors zur Verfügung gestellt.

Schließlich wird in Schritt 32, wie oben bereits erwähnt, aus der Größe n_{Dkl} gemäß den eingangs dargestellten Regellinien für "ECO" und "Sport" ein Drosselklappenwinkel α des Antriebsaggregats ermittelt. Dies erfolgt wiederum durch Interpolation zwischen einer verbrauchsoptimierten (ECO) und einer fahrdynamikorientierten (SPORT) Steuerkurve bzw. Übergangsfunktion. Der Winkel α bestimmt über die Drosselklappe eine Drehmomentabgabe des Antriebsaggregats. Die Ausgangsgrößen aus dem Regler an eine CVT-Getriebe-Steuerung sind dann die Solldrehzahl nₛₒₗₗ des Motors und der Drosselklappenwinkel α. Die Solldrehzahl kann beispielsweise durch eine Grenzübersetzungen eines Variators des CVT-Getriebes und/oder durch endliche Verstellgeschwindigkeiten begrenzt werden. Es stellt sich schließlich die vorerwähnte Istdrehzahl nᵢₛₜ am Antriebsaggregat ein.

Das erfindungsgemäße Verfahren ist nicht auf die beschriebene vorteilhafte Ausführungsform beschränkt. So kann beispielsweise der Drosselklappenwinkel α statt als Regelgröße ebenso als einfache Steuergröße für ein Stellglied der Drosselklappe verwendet werden.

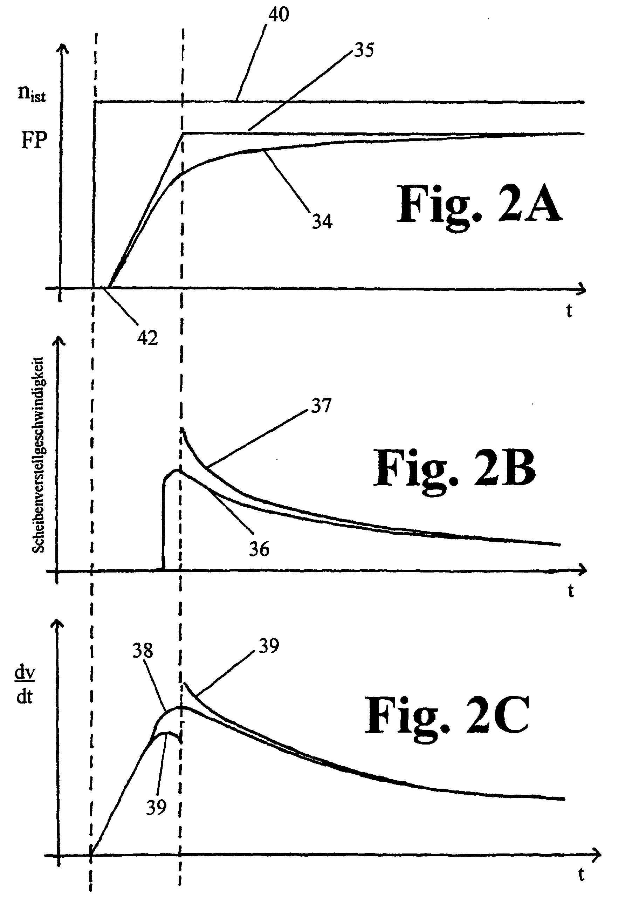

Unter Bezugnahme auf Fig. 2A bis 2C wird nachfolgend beispielhaft ein Zeitverlauf von Motordrehzahl nᵢₛₜ 34, 35, einer Scheibenverstellgeschwindigkeit 36, 37 im CVT-Getriebe und einer Fahrzeugbeschleunigung dv/dt 38, 39 beschrieben. Bezugszeichen 34, 36 und 38 bezeichnen dabei einen Verlauf, wie er sich bei einem erfindungsgemäßen Verfahren einstellt, und die Bezugszeichen 35, 37 und 39 bezeichnen dabei einen Verlauf, wie er sich bei einer herkömmlichen Steuerung eines CVT-Getriebes einstellt.

Nach einem Fahrpedalsprung gemäß eines Fahrpedalsignals 40 in Fig. 2A, welcher beispielhaft bei Fahrzeugstillstand erfolgt, beschleunigt das Fahrzeug zunächst in der Anfahrübersetzung. Nach einer mit 42 bezeichneten Einkuppelphase erhöht sich die Motordrehzahl nᵢₛₜ 34 bis die entsprechende Solldrehzahl nₛₒₗₗ erreicht wird. Während die Solldrehzahl nₛₒₗₗ bei konventionellen CVT-Ansteuerungen eine Konstante ist, kann durch Schritte 18 bis 22 des erfindungsgemäßen Reglers eine Korrelation zur Fahrgeschwindigkeit v hergestellt werden. Durch Schritt 22 wird dabei ein "harmonisierter" Drehzahlübergang zu Beginn des Verstellvorganges erreicht.

Die Scheibenverstellgeschwindigkeiten 36 sind durch die Erfindung infolge einer frühzeitigen Einleitung der Verstellung durch das "weiche" Einfangen der Motordrehzahl deutlich reduziert. Durch diese Reduzierung der Scheibenverstellgeschwindigkeiten ist es möglich, das Verstellsystem des CVT-Getriebes kleiner zu dimensionieren und somit den Getriebegesamtwirkungsgrad zu erhöhen.

Weiterhin wird durch das Einfangen der Motordrehzahl gemäß Schritt 22 ein stetiger Beschleunigungsverlauf 38 bewirkt. Ohne eine derartige Maßnahme ergibt sich bei Erreichen der Solldrehzahl ein sprunghafter Anstieg der Fahrzeugbeschleunigung 39, da die zum Hochbeschleunigen des Motors benötigte Leistung plötzlich zu Null wird und somit die gesamte Motorleistung zur Beschleunigung des Fahrzeugs zur Verfügung steht, wodurch diese sprunghaft ansteigt. Dieses Verhalten stellt bei stufenlosen Konzepten mit konventioneller Ansteuerung eine deutlich spürbare Verschlechterung des Fahrkomforts dar und wird durch die Erfindung wirkungsvoll beseitigt.

### BEZUGSZEICHENLISTE

- 10: Eingangsgröße Fahrpedal
- 12: Eingangsgröße Fahrertyperkennung
- 14: Bestimmung FP_{mod}
- 16: Bestimmung nₛₒₗₗ, n_{Dkl}, n_{Ziel}
- 18: Antwortfunktion PT1
- 20: Antwortfunktion PT1_{mod}
- 22: Antwortfunktion PT1_{gl}
- 24: Vergleich nₛₒₗₗ > n_{Ziel}
- 26: Absenken nₛₒₗₗ auf n_{Ziel}
- 28: Kickdown des Fahrpedals
- 30: Setze nₛₒₗₗ und n_{Ziel} gleich n_{Nenn}
- 32: Bestimmung Drosselklappenwinkel α
- 34: Motordrehzahl nᵢₛₜ
- 35: Motordrehzahl nᵢₛₜ (StdT)
- 36: Scheibenverstellgeschwindigkeit
- 37: Scheibenverstellgeschwindigkeit (StdT)
- 38: Fahrzeugbeschleunigung dv/dt
- 39: Fahrzeugbeschleunigung dv/dt (StdT)
- 40: Fahrpedalsignal
- 42: Einkupplephase

## Patentansprüche

1. Verfahren zum Regeln eines stufenlosen Automatikgetriebes eines Kraftfahrzeugs mit einem Antriebsaggregat und einem manuell betätigbaren Fahrpedal, wobei in Abhängigkeit von einer Stellung des Fahrpedals eine Solldrehzahl des Antriebsaggregats nₛₒₗₗ als Regelgröße für eine Übersetzungsregelung des stufenlosen Automatikgetriebes bestimmt wird,
**gekennzeichnet durch** folgende Schritte,
(a) Bestimmen einer zeitvariablen Antwortfunktion PT1(t) als Antwort auf eine Fahrpedalbetätigung, wobei eine der Fahrpedalbetätigung entsprechende Funktion mit einer vorbestimmten Zeitkonstante T1 tiefpaßgefiltert wird, so daß PT1(t) von null gegen einen vorbestimmten Grenzwert V ansteigt,
(b) Bestimmen einer zeitvariablen modifizierten Antwortfunktion PT1_{mod}(t) aus PT1(t) derart, daß letzterer ein Sprunganteil 1-V hinzugefügt wird, so daß PT1_{mod} als Antwort auf die Fahrpedalbetätigung auf den Wert 1-V springt und anschließend mit der Zeitkonstante T1 ansteigt,
(c) Bestimmen einer geglätteten zeitvariablen Antwortfunktion PT1_{gl}(t) **durch** Tiefpaßfiltern der zeitvariablen modifizierten Antwortfunktion PT1_{mod}(t) mit einer vorbestimmten Zeitkonstante T1_{gl} und
(d) Bestimmen der Solldrehzahl des Antriebsaggregats nₛₒₗₗ aus der geglätteten zeitvariablen modifizierten Antwortfunktion PT1_{gl} gemäß einer ersten vorbestimmten Übertragungsfunktion.

2. Verfahren nach Anspruch 1,
**dadurch gekennzeichnet, daß**
in Schritt (a) die Zeitkonstante T1 in Abhängigkeit von einer Fahrzeugbeschleunigung gemäß T1 = f(dv/dt) bestimmt wird.

3. Verfahren nach Anspruch 1 oder 2,
**dadurch gekennzeichnet, daß**
die einer Fahrpedalbetätigung entsprechende Funktion in Schritt (a) eine Sprungfunktion ist.

4. Verfahren nach Anspruch 3,
**dadurch gekennzeichnet, daß**
die Sprungfunktion auf 1 normiert wird und V ein Wert zwischen 0 und 1 annimmt.

5. Verfahren nach einem der vorhergehenden Ansprüche,
**gekennzeichnet durch** folgende zusätzliche Schritte vor Schritt (a),
(a0) Bestimmen eines Fahrpedalsignals FP gemäß einer Betätigung des Fahrpedals, und
(a1) Bestimmen eines modifizierten Fahrpedalwertes FP_{mod} aus FP gemäß einer zweiten vorbestimmten Übertragungsfunktion zwischen FP und FP_{mod},
wobei anschließend in Schritt (a) eine Tiefpaßfilterung des modifizierten Fahrpedalwertes FP_{mod} erfolgt.

6. Verfahren nach Anspruch 5,
**dadurch gekennzeichnet, daß**
die zweite vorbestimmte Übertragungsfunktion in Abhängigkeit von einem gewünschten Fahrzeugverhalten derart gewählt wird, daß sich ein ökonomischer oder ein sportlicher Fahrzeugbetrieb einstellt.

7. Verfahren nach einem der vorhergehenden Ansprüche,
**gekennzeichnet durch** folgenden zusätzlichen Schritt,
(e) Bestimmen einer Zieldrehzahl n_{Ziel} aus FP_{mod} gemäß der ersten vorbestimmten Übertragungsfunktion.

8. Verfahren nach Anspruch 7,
**dadurch gekennzeichnet, daß**
die erste vorbestimmte Übertragungsfunktion in Abhängigkeit von einem gewünschten Fahrzeugverhalten derart gewählt wird, daß sich ein ökonomischer oder ein sportlicher Fahrzeugbetrieb einstellt.

9. Verfahren nach Anspruch 7 oder 8,
**dadurch gekennzeichnet, daß**
in Schritt (c) die Zeitkonstante T1_{gl} in Abhängigkeit von der in Schritt (e) bestimmten Drehzahl n_{Ziel} und einer momentanen Istdrehzahl nᵢₛₜ gemäß T1_{gl} = f(n_{Ziel},nᵢₛₜ) bestimmt wird.

10. Verfahren nach einem der vorhergehenden Ansprüche 7 bis 9,
**gekennzeichnet durch** folgenden zusätzlichen Schritt,
(f) Vergleichen von nₛₒₗₗ mit n_{Ziel}, wobei im Falle nₛₒₗₗ > n_{Ziel} die Soll-Drehzahl nₛₒₗₗ mit einem vorbestimmten Drehzahlgradienten auf n_{Ziel}, insbesondere linear, abgesenkt wird.

11. Verfahren nach einem der vorhergehenden Ansprüche,
**gekennzeichnet durch** folgenden zusätzlichen Schritt,
(g) Feststellen ob eine Kickdown-Betätigung des Fahrpedals vorliegt und bei positiver Feststellung Setzten nₛₒₗₗ gleich einer Nenndrehzahl n_{Nenn} des Antriebsaggregats.

12. Verfahren nach einem der vorhergehenden Ansprüche,
**gekennzeichnet durch** folgenden zusätzlichen Schritt,
(e1) Bestimmen einer Drehzahl n_{Dkl} aus PT1_{mod} gemäß der ersten vorbestimmten Übertragungsfunktion zur Bestimmung eines Drosselklappenwinkels α einer Drosselklappenstellung.

13. Verfahren nach Anspruch 10 und Anspruch 12,
**dadurch gekennzeichnet, daß**
in Schritt (f) im Falle nₛₒₗₗ > n_{Ziel} die Drehzahl n_{Dkl} gleich der Zieldrehzahl n_{Ziel} des Antriebsaggregats gesetzt wird.

14. Verfahren nach Anspruch 11 und Anspruch 12 oder 13,
**dadurch gekennzeichnet, daß**
in Schritt (g) bei positiver Feststellung einer Kickdown-Betätigung n_{Dkl} gleich der Nenndrehzahl n_{Nenn} des Antriebsaggregats gesetzt wird.

15. Verfahren nach einem der Ansprüche 12 bis 14,
**gekennzeichnet durch** folgenden zusätzlichen Schritt,
(g1) Bestimmen des Drosselklappenwinkels α einer Drosselklappenstellung aus n_{Dkl} gemäß einer dritten vorbestimmten Übertragungsfunktion zwischen n_{Dkl} und α.

16. Verfahren nach Anspruch 15,
**dadurch gekennzeichnet, daß**
die dritte vorbestimmte Übertragungsfunktion in Abhängigkeit von einem gewünschten Fahrzeugverhalten derart gewählt wird, daß sich ein ökonomischer oder ein sportlicher Fahrzeugbetrieb einstellt.

## Claims

1. Method for controlling a continuously variable automatic gearbox of a motor vehicle having a drive unit and an accelerator pedal which can be activated manually, a set point rotational speed of the drive unit nₛₑₜₚ being determined as a function of the position of the accelerator pedal as a controlled variable for the transmission ratio control of the continuously variable automatic gearbox, **characterized by** the following steps,
(a) a response function PT1(t) which is variable over time in response to activation of an accelerator pedal is determined, a function which corresponds to the activation of the accelerator pedal being low-pass-filtered with a predetermined time constant T1, with the result that PT1(1) rises from zero towards a predetermined limiting value V,
(b) a modified response function PT1_{mod}(t) which is variable over time is determined from PT1(t) in such a way that a step component 1-V is added to the latter, with the result that PT1_{mod} jumps to the value 1-V in response to the activation of the accelerator pedal and subsequently rises with the time constant T1,
(c) a smoothed response function PT1_{gl}(t) which is variable over time is determined by low-pass-filtering the modified response function PT1_{mod}(t), which is variable over time, with a predetermined time constant T1_{gl} and
(d) the set point rotational speed of the drive assembly nₛₑₜₚ is determined from the smoothed modified response function PT1_{gl}, which is variable over time, in accordance with a first predetermined transmission function.

2. Method according to Claim 1, **characterized in that** in step (a) the time constant T1 is determined as a function of a vehicle acceleration in accordance with T1 = f(dv/dt).

3. Method according to Claim 1 or 2, **characterized in that** the function corresponding to activation of an accelerator pedal in step (a) is a jump function.

4. Method according to Claim 3, **characterized in that** the jump function is standardized to 1 and V assumes a value between 0 and 1.

5. Method according to one of the preceding claims, **characterized by** the following additional steps before step (a),
(a0 an accelerator pedal signal FP is determined in accordance with activation of the accelerator pedal, and
(a1) a modified accelerator pedal value FP_{mod} is determined from FP in accordance with a second, predetermined transmission function between FP and FP_{mod},
the modified accelerator pedal value FP_{mod} being subsequently low-pass-filtered in step (a).

6. Method according to Claim 5, **characterized in that** the second predetermined transmission function is selected as a function of a desired vehicle behaviour in such a way that an economical or a sporty vehicle operating mode is set.

7. Method according to one of the preceding claims, **characterized by** the following additional step,
(e) a target rotational speed n_{targ} is determined from FP_{mod} in accordance with the first predetermined transmission function.

8. Method according to Claim 7, **characterized in that** the first predetermined transmission function is selected as a function of a desired vehicle behaviour in such a way that an economical or sporty vehicle operating mode is set.

9. Method according to Claim 7 or 8, **characterized in that** in step (c) the time constant T1_{gl} is determined as a function of the rotational speed n_{targ} determined in step (e) and an instantaneous actual rotational speed n_{act} in accordance with T1_{gl} = f(n_{targ},n_{act}).

10. Method according to one of the preceding claims 7 to 9, **characterized by** the following additional step,
(f) nₛₑₜₚ is compared with n_{targ}, the set point rotational speed nₛₑₜₚ being reduced to n_{targ} with a predetermined rotational speed gradient, in particular linearly, when nₛₑₜₚ > n_{targ}.

11. Method according to one of the preceding claims, **characterized by** the following additional step,
(g) it is determined whether there is kickdown activation of the accelerator pedal, and in the case of a positive determination, setting nₛₑₜₚ to a rated rotational speed n_{rated} of the drive unit.

12. Method according to one of the preceding claims, **characterized by** the following additional step,
(e1) a rotational speed n_{Dkl} is determined from PT1_{mod} in accordance with the first predetermined transmission function in order to determine a throttle valve angle α of a throttle valve position.

13. Method according to Claim 10 and Claim 12, **characterized in that** in step (f) the rotational speed n_{Dkl} is set equal to the target rotational speed n_{targ} of the drive unit when nₛₑₜₚ > n_{targ}.

14. Method according to Claim 11 and Claim 12 or 13, **characterized in that** in step (g) n _{Dkl} is set equal to the rated rotational speed n_{rated} of the drive unit when there is a positive determination of a kickdown activation.

15. Method according to one of Claims 12 to 14, **characterized by** the following additional step,
(g1) the throttle valve angle α of a throttle valve position is determined from n_{Dkl} in accordance with a third predetermined transmission function between n_{Dkl} and α.

16. Method according to Claim 15, **characterised in that** the third predetermined transmission function is selected as a function of a desired vehicle behaviour in such a way that an economical or a sporty vehicle operating mode is set.

## Revendications

1. Procédé de contrôle d'une transmission automatique à variation de vitesse continue d'un véhicule automobile, comprenant une unité d'entraînement et une pédale d'accélérateur actionnable manuellement, dans lequel, en fonction d'une position de la pédale d'accélérateur, un régime de consigne de l'unité d'entraînement nₛₒₗₗ est défini en tant que grandeur de contrôle pour un contrôle de l'engrenage de la transmission automatique à variation de vitesse continue, **caractérisé par** les étapes suivantes :
(a) détermination d'une fonction réponse variable dans le temps PT1(t) en tant que réponse à un actionnement de la pédale d'accélérateur, une fonction correspondant à l'actionnement de la pédale d'accélérateur, avec une constante de temps T1 prédéterminée, étant soumise à un filtrage passe-bas, de sorte que PT1(t) croisse de zéro vers une valeur limite prédéterminée V,
(b) détermination d'une fonction réponse modifiée variable dans le temps PT1_{mod}(t) à partir de PT1(t) de telle sorte que l'on ajoute à cette dernière une proportion de saut 1-V, de sorte que PT1_{mod} en tant que réponse à l'actionnement de la pédale d'accélérateur saute à la valeur 1-V, et croisse ensuite avec la constante de temps T1,
(c) détermination d'une fonction réponse lissée variable dans le temps PT1_{gl}(t) par un filtrage passe-bas de la fonction réponse modifiée variable dans le temps PT1_{mod}(t) avec une constante de temps prédéterminée T1_{gl} et
(d) détermination du régime de consigne de l'unité d'entraînement nₛₒₗₗ à partir de la fonction réponse modifiée lissée variable dans le temps PT1_{gl} selon une première fonction de transfert prédéterminée.

2. Procédé selon la revendication 1, **caractérisé en ce que** dans l'étape (a), la constante de temps T1 est déterminée en fonction d'une accélération du véhicule suivant la fonction T1 = f(dv/dt).

3. Procédé selon la revendication 1 ou 2, **caractérisé en ce que** la fonction correspondant à un actionnement de la pédale d'accélérateur dans l'étape (a) est une fonction de saut.

4. Procédé selon la revendication 3, **caractérisé en ce que** la fonction de saut est normée à 1 et V prend une valeur entre 0 et 1.

5. Procédé selon l'une quelconque des revendications précédentes, **caractérisé par** les étapes supplémentaires suivantes avant l'étape (a) :
(a0) détermination d'un signal de pédale d'accélérateur FP en fonction d'un actionnement de la pédale d'accélérateur, et
(a1) détermination d'une valeur de pédale d'accélérateur modifiée FP_{mod} à partir de FP selon une deuxième fonction de transfert prédéterminée entre FP et FP_{mod},
où, ensuite, à l'étape (a), un filtrage passe-bas de la valeur de la pédale d'accélérateur modifiée FP_{mod} est réalisé.

6. Procédé selon la revendication 5, **caractérisé en ce que** la deuxième fonction de transfert prédéterminée est choisie en fonction d'un comportement du véhicule souhaité, de telle sorte que l'on obtienne une conduite du véhicule économique ou sportive.

7. Procédé selon l'une quelconque des revendications précédentes, **caractérisé par** l'étape supplémentaire suivante:
(e) détermination d'un régime cible n_{Ziel} à partir de FP_{mod} selon la première fonction de transfert prédéterminée.

8. Procédé selon la revendication 7, **caractérisé en ce que** la première fonction de transfert prédéterminée est choisie en fonction d'un comportement du véhicule souhaité, de telle sorte que l'on obtienne une conduite du véhicule économique ou sportive.

9. Procédé selon la revendication 7 ou 8, **caractérisé en ce que** dans l'étape (c), la constante de temps T1_{gl} est déterminée en fonction du régime n_{Ziel} déterminé dans l'étape (e) et d'un régime réel instantané nᵢₛₜ selon T1_{gl} = f(n_{Ziel}, nᵢₛₜ).

10. Procédé selon l'une quelconque des revendications 7 à 9, **caractérisé par** l'étape supplémentaire suivante :
(f) comparaison de n_{Soll} avec n_{Ziel}, le régime de consigne nₛₒₗₗ étant abaissé avec un gradient de régime prédéterminé à n_{Ziel,} en particulier de façon linéaire, lorsque nₛₒₗₗ > n_{Ziel}.

11. Procédé selon l'une quelconque des revendications précédentes, **caractérisé par** l'étape supplémentaire suivante :
(g) établir s'il existe un actionnement de type pédale d'accélérateur au plancher (Kickdown) de la pédale d'accélérateur et en cas de confirmation, fixer nₛₒₗₗ égal à un régime nominal n_{Nenn} de l'unité d'entraînement.

12. Procédé selon l'une quelconque des revendications précédentes, **caractérisé par** l'étape supplémentaire suivante :
(e) détermination d'un régime n_{Dkl} à partir de PT1mod selon la première fonction de transfert prédéterminée pour déterminer un angle de papillon α d'une position de papillon.

13. Procédé selon la reveneication 10 et la revendication 12, **caractérisé en ce qu'**à l'étape (f), au cas où nₛₒₗₗ > n_{Ziel}, le régime n_{Dkl} est fixé comme étant égal au régime cible n_{Ziel} de l'unité d'entraînement.

14. Procédé selon la revendication 11 et la revendication 12 ou 13, **caractérisé en ce qu'**à l'étape (g), en cas de confirmation d'un actionnement de type pédale d'accélérateur au plancher (Kickdown), n_{Dkl} est fixé comme étant égal au régime nominal n_{Nenn} de l'unité d'entraînement.

15. Procédé selon l'une quelconque des revendications 12 à 14, **caractérisé par** l'étape supplémentaire suivante:
(g1) détermination de l'angle de papillon α d'une position de papillon à partir de n_{Dkl} selon une troisième fonction de transfert prédéterminée entre n_{Dkl} et α.

16. Procédé selon la revendication 15, **caractérisé en ce que** la troisième fonction de transfert prédéterminée est choisie en fonction d'un comportement du véhicule souhaité, de telle sorte que l'on obtienne une conduite du véhicule économique ou sportive.
